# EUROPÄISCHE PATENTSCHRIFT

(11) **EP 0 585 529 B1**
(45) Veröffentlichungstag und Bekanntmachung des Hinweises auf die Patenterteilung: **23.07.1997**
(21) Anmeldenummer: 93107338.1
(22) Anmeldetag: 06.05.1993
(51) Int. Cl.: F16C 27/04, B60K 17/24

(54) **Stützlager**
Support bearing
Palier de support

(30) Priorität: 04.09.1992 DE 4229613
(43) Veröffentlichungstag der Anmeldung: 09.03.1994
(73) Patentinhaber: Firma Carl Freudenberg, D-69469 Weinheim (DE)
(72) Erfinder: Bade, Karl Heinz, W-6942 Mörlenbach (DE); Schütz, Michael, W-6149 Rimbach (DE)

(56) Entgegenhaltungen:
- EP-A- 0 300 093
- EP-A- 0 371 194
- DE-A- 2 061 625
- FR-A- 2 656 393
- GB-A- 2 008 714

## Beschreibung

Die Erfindung betrifft ein Stützlager, umfassend ein Wälzlager mit einem Innen- und einem Außenring sowie einen den Außenring mit radialem Abstand umschließenden Stützring, wobei der Außenring und der Stützring durch zumindest zwei in Umfangsrichtung verteilte Stegkörper aus gummielastischem Werkstoff aufeinander abgestützt sind, die geneigt ausgebildet und durch einen Umfangsabstand getrennt sind.

Ein solches Lager ist aus der FR-A-2 656 393 bekannt. Die zwischen dem Außenring und dem Stützring angeordneten, einander benachbarten Stegkörper sind in entgegengesetztem Drehsinn geneigt. Die Stegkörper schneiden einander und sind dadurch einstückig ausgebildet.

Ein weiteres Lager ist aus der DE-B-20 61 625 bekannt. Das vorbekannte Lager gelangt als Zwischenlager für die Gelenkwelle von Kraftfahrzeugen zur Anwendung, wobei die Stegkörper gleichmäßig in Umfangsrichtung verteilt sind und aus gummielastischem Werkstoff bestehen. Die Stegkörper erstrecken sich zwischen dem Außenring und dem Stützring in radialer Richtung. Dabei ist allerdings zu beachten, daß die Gebrauchseigenschaften des vorbekannten Lagers während einer langen Gebrauchsdauer wenig befriedigend sind. Im Anschluß an den Herstellungsprozeß und während der bestimmungsgemäßen Verwendung treten innerhalb der Stegkörper, insbesondere im Bereich der in radialer Richtung inneren und äußeren Halteflächen gebrauchsdauerverringernde Zug- und Schubspannungen auf, die zu einem vorzeitigen Verschleiß und damit Ausfall des Lagers führen können.

Der Erfindung liegt die Aufgabe zugrunde, ein Lager der vorbekannten Art derart weiterzuentwickeln, daß gebrauchsdauerverringernde Schub- und Zugspannungen innerhalb der gummielastischen Stegkörper zuverlässig vermieden werden und daß das Lager verbesserte Gebrauchseigenschaften während einer verlängerten Gebrauchsdauer aufweist. Desweiteren soll die Montage des Stützlagers durch die Verwendung weniger Einzelteile erleichtert werden.

Diese Aufgabe wird erfindungsgemäß mit Anspruch 1 gelöst. Auf vorteilhafte Ausgestaltungen nehmen die Unteransprüche Bezug.

Zur Vermeidung von Schub- und Zugspannungen innerhalb der gummielastischen Stegkörper ist es vorgesehen, daß alle Stegkörper im gleichen Drehsinn geneigt und ausgehend von der durch den Außendurchmesserkreis des Außenrings gebildeten Evolute evolventenförmig ausgebildet sind. Die herstellungsbedingten Zugspannungen, die einen gebrauchsdauerverringernden Einfluß auf gummielastische Werkstoffe haben, werden durch diese Ausgestaltung zuverlässig vermieden. Ein herstellungsbedingtes Schrumpfen der Stegkörper während der Vulkanisation bedingt nicht, wie bei in radialer Richtung angeordneten Stegkörpern Zugspannungen, sondern lediglich eine Relativverdrehung von Außenring und Stützring zueinander.

Auch während der bestimmungsgemäßen Verwendung weist das Stützlager ausgezeichnete Gebrauchseigenschaften auf. Insbesondere der bei sich in radialer Richtung erstreckenden Stegkörpern mechanisch hochbelastete Bereich der Halteflächen, mit denen der Gummikörper an den in radialer Richtung benachbarten Ringen festgelegt ist, ist bei evolventenförmig ausgebildeten Stegkörpern deutlich haltbarer, so daß sich wesentlich verbesserte Gebrauchseigenschaften während einer längeren Gebrauchsdauer ergeben.

Zur Erzielung eines besonders teilearmen und in fertigungstechnischer und wirtschaftlicher Hinsicht günstigen Aufbaus können die Stegkörper in radialer Richtung innere und äußere Halteflächen aufweisen, wobei die inneren Halteflächen mit der Mantelfläche des Außenrings und die äußeren Halteflächen mit der Innenumfangsfläche des Stützringes adhäsiv verbunden sind. Die Verwendung zusätzlicher Stütz- und Versteifungsringe ist dadurch entbehrlich.

Hinsichtlich einer einfachen Fertigung und einer einfachen Montage des Stützlagers hat es sich als vorteilhaft bewährt, wenn die einander benachbarten Stegkörper im Bereich ihrer inneren und äußeren Halteflächen ineinander übergehend ausgebildet und in Umfangsrichtung gleichmäßig verteilt sind. Der Stützring kann auf der dem Außenring zugewandten Seite zumindest eine Durchbrechung aufweisen, die vom Werkstoff der Stegkörper durchdrungen ist, wobei der Werkstoff der Stegkörper auf der den Stegkörpern abgewandten Seite der Durchbrechung ineinander übergeht. Hierbei ist von Vorteil, daß eine sichere mechanische Festlegung der Stegkörper am Stützring erfolgt, die auch während einer langen Gebrauchsdauer unverändert erhalten bleibt.

Der durch die einander benachbarten Stegkörper gebildete Umfangsabstand kann im wesentlichen der Dicke der einzelnen Stegkörper in Umfangsrichtung entsprechen. Durch diese Ausgestaltung ist eine einfache Herstellbarkeit des Stützlagers bedingt.

Zur Vermeidung von mechanischen Überbeanspruchungen der Stegkörper kann zumindest eine der einander zugewandten Oberflächen mit einer Profilierung versehen sein. Die Profilierung kann beispielsweise durch in Richtung der gegenüberliegenden Oberfläche vorstehende Anschlagnoppen oder in Entformungsrichtung verlaufende Anschlagrippen gebildet sein. Durch diese Ausgestaltung wird Anschlaggeräuschen vorgebeugt, die ohne Oberflächenprofilierung bei extremen Auslenkbewegungen des Stützringes zum Wälzlager beim Anschlagen der einander benachbarten Oberflächen auftreten könnten. Desweiteren ist von Vorteil, daß große radiale und umfangsgerichtete Relativverlagerungen des Wälzlagers und des Stützlagers zueinander durch die an der Oberflächen angeordnete Profilierung begrenzt werden können, wobei die Profilierung in Richtung der Gegenanschlagfläche bevorzugt einen sich verringernden Querschnitt aufweist, um eine Endlagendämpfung bei Berührung der Profilierung mit der Gegenanschlagfläche zu bewirken.

Der Stützring kann ein im wesentlichen L-förmiges Profil aufweisen und als Befestigungselement ausgebildet sein und im Bereich seines Radialschenkels mit zumindest einer Befestigungsdurchbrechung versehen sein. Die Verwendung sekundärer Befestigungselemente ist dadurch entbehrlich, das gesamte Stützlager besteht dadurch aus nur weinigen Einzelteilen und weist ein geringes Gewicht auf.

Das erfindungsgemäße Gummilager wird nachfolgend anhand der als Anlage beigefügten Zeichnungen näher erläutert. Die Zeichnungen zeigen Ausführungsbeispiele des Lagers in schematischer Darstellung.

In Figur 1 ist ein erstes Ausführungsbeispiel des erfindungsgemäßen Stützlagers in einer Ansicht gezeigt.

In Figur 2 ist ein zweites Ausführungsbeispiel des Stützlagers, ähnlich dem Stützlager aus Figur 1 gezeigt. Zur Verdeutlichung sind in den Figuren 1 und 2 die Stegkörper aus gummielastischem Werkstoff geschnitten dargestellt.

In Figur 3 ist das in Figur 2 gezeigte Stützlager entlang der Linie A-A geschnitten dargestellt.

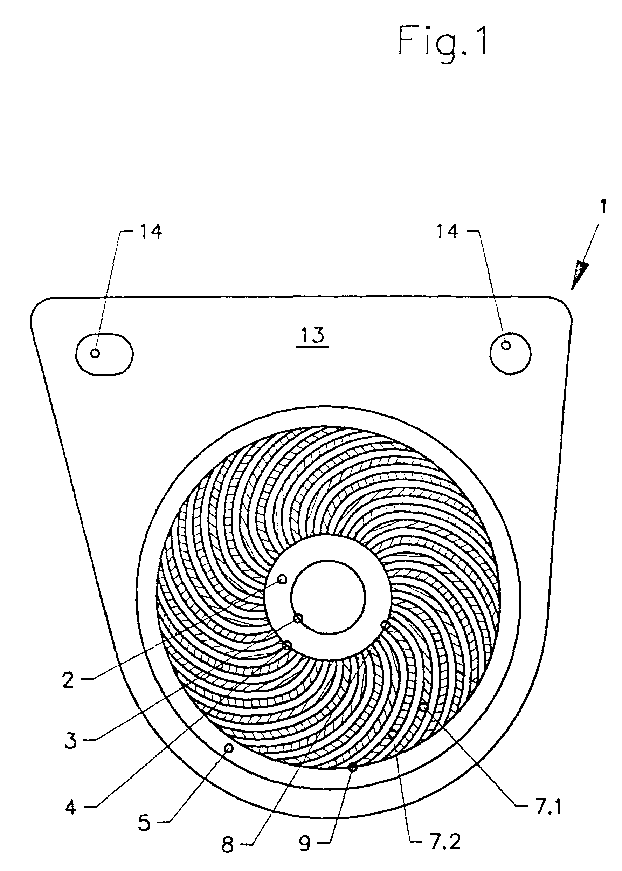

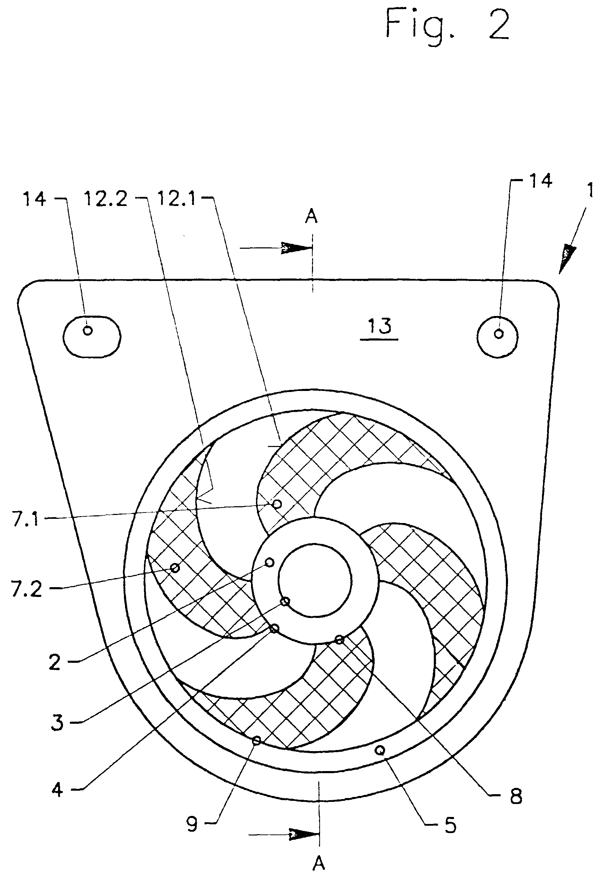

Die Ausführungsbeispiele aus den Figuren 1 und 2 zeigen jeweils ein Stützlager 1, das im wesentlichen aus einem Wälzlager 2 mit einem Innenring 3 und einem Außenring 4 besteht. Der Außenring 4 und der Stützring 5 sind durch die Stegkörper 7.1, 7.2, ... aus gummielastischem Werkstoff aufeinander abgestützt. Alle Stegkörper 7.1, 7.2, ... sind im gleichen Drehsinn geneigt und ausgehend von der durch den Außendurchmesserkreis des Außenrings 4 gebildeten Evolute evolventenförmig ausgebildet. In diesen Ausführungsbeispielen sind die inneren und äußeren Halteflächen 8, 9 der Stegkörper 7.1, 7.2, ... an die benachbarten Oberflächen von Außenring 4 und Stützring 5 anvulkanisiert. Der Stützring 5 ist als Befestigungselement ausgebildet und weist im Bereich seines Radialschenkels 13 zwei Befestigungsdurchbrechungen 14 auf. Die inneren Halteflächen 8 der Stegkörper 7.1, 7.2, ... sind an die Mantelfläche 10 des Außenringes 4 anvulkanisiert, während die äußeren Halteflächen 9 mit der Innenumfangsfläche 11 des Stützringes adhäsiv verbunden sind.

In Figur 1 ist das Stützlager 1 mit einer Vielzahl von Stegkörpern 7.1, 7.2, ... versehen, wobei der Umfangsspalt, der voneinander benachbarten Stegkörpern gebildet wird, ungefähr eine Erstreckung aufweist, die der Dicke der einzelnen Stegkörper entspricht. Ein derart ausgebildetes Stützlager 1 weist sehr gute Gebrauchseigenschaften während einer langen Gebrauchsdauer auf, da bei Relativverlagerungen in radialer Richtung und in Umfangsrichtung die mechanischen Belastungen auf die Halteflächen 8, 9 der Stegkörper 7.1, 7.2, ... auf ein Minimum begrenzt sind.

Das Stützlager aus Figur 2 weist bei gleichem Werkstoff der Stegkörper 7.1, 7.2, ... eine vergleichsweise höhere Tragfähigkeit auf und die Herstellbarkeit ist durch die reduzierte Anzahl der Stegkörper 7.1, 7.2, ... relativ vereinfacht. In diesem Ausführungsbeispiel gelangen vier Stegkörper zu Anwendung, jedoch können auch 2, 3, 5 oder eine beliebige andere Anzahl von Stegkörpern zur Anwendung gelangen.

Der Stützring 5 ist in den Ausführungsbeispielen gemäß der Figuren 1 und 2 L-förmig ausgebildet und im Bereich seines Radialschenkels 13 mit zwei Befestigungsdurchbrechungen 14 versehen.

Die Stegkörper 7.1, 7.2, ... können beispielsweise mit einer hier nicht dargestellten Armierung versteift sein, so daß Relaxationserscheingungen des gummielastischen Werkstoffs während einer langen Gebrauchsdauer deutlich reduziert werden.

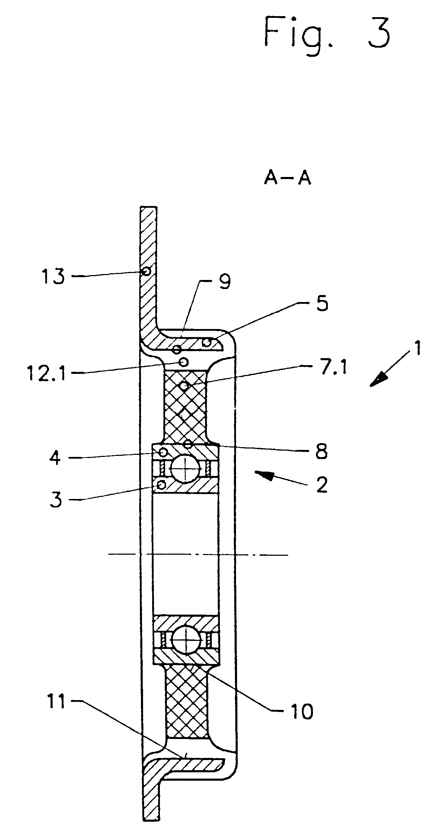

In Figur 3 ist das Ausführungsbeispiel aus Figur 2 entlang der Linie A-A geschnitten dargestellt. Der Stützring 5 ist im Bereich seines Axialschenkels vom gummielastischen Werkstoff der Stegkörper 7.1, 7.2, ... vollständig umschlossen. Der Stützring 5 kann beispielsweise Radialdurchbrechungen aufweisen, die vom gummielastischen Werkstoff der Stegkörper 7.1, 7.2, ... durchdrungen sind und nach ihrer Verfestigung für eine gute Verbindung und mechanische Verkrallung der beiden Teile aneinander sorgen. Als Wälzlager 2 gelangt in diesen Ausführungsbeispielen ein gedichtetes Rillenkugellager zur Anwendung. Anders gestaltete Wälzlager, beispielsweise Rollenlager oder Tonnenlager können ebenfalls zur Anwendung gelangen.

## Patentansprüche

1. Stützlager (1), umfassend ein Wälzlager (2) mit einem Innen-(3) und einem Außenring (4) sowie einen den Außenring (4) mit radialem Abstand umschließenden Stützring (5), wobei der Außenring (4) und der Stützring (5) durch zumindest zwei in Umfangsrichtung verteilte Stegkörper (7.1, 7.2, ...) aus gummielastischem Werkstoff aufeinander abgestützt sind, die geneigt ausgebildet und durch einen Umfangsabstand getrennt sind, dadurch gekennzeichnet, daß alle Stegkörper (7.1, 7.2, ...) im gleichen Drehsinn geneigt und ausgehend von der durch den Außendurchmesserkreis des Außenrings (4) gebildeten Evolute evolventenförmig ausgebildet sind.

2. Stützlager nach Anspruch 1, dadurch gekennzeichnet, daß die Stegkörper (7.1, 7.2, ...) in radialer Richtung innere und äußere Halteflächen (8, 9) aufweisen und daß die inneren Halteflächen (8) mit der Mantelfläche (10) des Außenrings (4) und die äußeren Halteflächen (9) mit der Innenumfangsfläche (11) des Stützrings (5) adhäsiv verbunden sind.

3. Stützlager nach Anspruch 1 bis 2, dadurch gekennzeichnet, daß die Stegkörper (7.1, 7.2, ...) im Bereich ihrer inneren und äußeren Halteflächen (8, 9) ineinander übergehend ausgebildet und in Umfangsrichtung gleichmäßig verteilt sind.

4. Stützlager nach Anspruch 1 bis 3, dadurch gekennzeichnet, daß der durch die einander benachbarten Stegkörper (7.1, 7.2, ...) gebildete Umfangsabstand im wesentlichen der Dicke der einzelnen Stegkörper (7.1, 7.2, ...) in Umfangsrichtung entspricht.

5. Stützlager nach Anspruch 1 bis 4, dadurch gekennzeichnet, daß die Stegkörper (7.1, 7.2, ...) in Umfangsrichtung durch einander benachbarte Oberflächen (12.1, 12.2, ...) begrenzt sind und daß zumindest eine der einander zugewandten Oberflächen (12.1, 12.1, ...) mit einer Profilierung versehen ist.

6. Stützlager nach Anspruch 5, dadurch gekennzeichnet, daß die Profilierung durch in Richtung der gegenüberliegenden Oberfläche vorstehende Anschlagnoppen gebildet ist.

7. Stützlager nach Anspruch 1 bis 6, dadurch gekennzeichnet, daß der Stützring (5) ein im wesentlichen L-förmiges Profil aufweist und als Befestigungselement ausgebildet ist und im Bereich seines Radialschenkels (13) mit zumindest einer Befestigungsdurchbrechung (14) versehen ist.

## Claims

1. A support bearing (1) comprising a rolling bearing (2) with an inner ring (3) and an outer ring (4), and a supporting ring (5) which surrounds the outer ring (4) with radial spacing, the outer ring (4) and the supporting ring (5) being supported on one another by at least two web bodies (7.1, 7.2, ...) which are made of rubber-elastic material and distributed in the circumferential direction and which are of oblique design and separated by a circumferential spacing, characterized in that all the web bodies (7.1, 7.2, ...) are inclined in the same direction of rotation and are of involute design starting from the involute formed by the circle of the outside diameter of the outer ring (4).

2. A support bearing according to claim 1, characterized in that the web bodies (7.1, 7.2, ...) have inner and outer holding surfaces (8, 9) in the radial direction, and in that the inner holding surfaces (8) are adhesively bonded to the outer surface (10) of the outer ring (4) and the outer holding surfaces (9) are adhesively bonded to the inside circumferential surface (11) of the supporting ring (5).

3. A support bearing according to either of claims 1 and 2, characterized in that the web bodies (7.1, 7.2, ...) are designed to merge one into the other in the region of their inner and outer holding surfaces (8, 9) and are uniformly distributed in the circumferential direction.

4. A support bearing according to any of claims 1 to 3, characterized in that the circumferential spacing formed by the mutually adjacent web bodies (7.1, 7.2, ...) corresponds essentially to the thickness of the individual web bodies (7.1, 7.2, ...) in the circumferential direction.

5. A support bearing according to any of claims 1 to 4, characterized in that the web bodies (7.1, 7.2, ...) are bounded in the circumferential direction by mutually adjacent surfaces (12.1, 12.2, ...), and in that at least one of the mutually facing surfaces (12.1, 12.2, ...) is provided with a profile.

6. A support bearing according to claim 5, characterized in that the profile is formed by stop knobs projecting in the direction of the opposite surface.

7. A support bearing according to any of claims 1 to 6, characterized in that the supporting ring (5) has an essentially L-shaped profile and is designed as a fastening element and is provided with at least one fastening opening (14) in the region of its radial limb (13).

## Revendications

1. Palier de support (1), comprenant un roulement (2) comportant une bague intérieure (3) et une bague extérieure (4) ainsi qu'une bague de support (5) entourant la bague extérieure (4) à une distance radiale, la bague extérieure (4) et la bague de support (5) étant appuyées l'une sur l'autre au moyen d'au moins deux corps intermédiaires (7.1, 7.2,...) en matériau élastomère répartis dans la direction circonférentielle, qui sont inclinés et sont séparés par un intervalle circonférentiel, caractérisé en ce que tous les corps intermédiaires (7.1, 7.2,...) sont inclinés dans le même sens de rotation et sont exécutés de manière à former des développantes à partir de la développée formée par le cercle du diamètre extérieur de la bague extérieure (4).

2. Palier de support selon la revendication 1, caractérisé en ce que les corps intermédiaires (7.1, 7.2,...) sont pourvus, dans la direction radiale, de surfaces d'appui intérieures et extérieures (8, 9) et en ce que les surfaces d'appui intérieures (8) sont reliées de manière adhésive à la surface périphérique (10) de la bague extérieure (4) et les surfaces d'appui extérieures (9) sont reliées de manière adhésive à la surface de la circonférence interne (11) de la bague de support (5).

3. Palier de support selon les revendications 1 à 2, caractérisé en ce que les corps intermédiaires (7.1, 7.2,...) sont exécutés de manière à se confondre dans la zone de leurs surfaces d'appui intérieures et extérieures (8, 9) et sont répartis de manière régulière dans la direction circonférentielle.

4. Palier de support selon l'une des revendications 1 à 3, caractérisé en ce que l'intervalle circonférentiel formé par les corps intermédiaires (7.1, 7.2,...) contigus les uns aux autres correspond essentiellement à l'épaisseur des corps intermédiaires (7.1, 7.2,...) individuels dans la direction circonférentielle.

5. Palier de support selon l'une des revendications 1 à 4, caractérisé en ce que les corps intermédiaires (7.1, 7.2,...) sont limités, dans la direction circonférentielle, par des surfaces (12.1, 12.2,...) contiguës les unes aux autres et en ce qu'au moins une des surfaces (12.1, 12.2,...) tournées les unes vers les autres est pourvue d'un profilage.

6. Palier de support selon la revendication 5, caractérisé en ce que le profilage est formé par des saillies de butée avançant en direction de la surface située en face.

7. Palier de support selon l'une des revendications 1 à 6, caractérisé en ce que la bague de support (5) a un profil ayant essentiellement la forme d'un L et est exécutée en tant qu'élément de fixation, et est pourvue, dans la région de son aile radiale (13), d'au moins une découpure de fixation (14).
